# EUROPEAN PATENT APPLICATION

(11) **EP 3 864 961 A1**
(43) Date of publication of application: **18.08.2021**
(21) Application number: 20156967.0
(22) Date of filing: 12.02.2020
(51) Int. Cl.: A01N 37/02, A01N 63/00, A01P 13/00, A01N 37/46

(54) **HERBICIDAL COMPOSITION AND METHOD FOR CONTROLLING INVASIVE PLANT SPECIES**

(71) Applicant: Weexit B.V., 3161 XP Rhoon (NL)
(72) Inventor: Dijke, Jimmie, 3161 XP Rhoon (NL)
(74) Representative: Michalski Hüttermann & Partner Patentanwälte mbB

(57) **Abstract**

This invention concerns a herbicide composition. In particular, this invention concerns a herbicidal composition for effective control of invasive plant species, such as the Japanese knotweed. The invented herbicide composition contains at least one free saturated fatty acid and one active enzyme from the group of glucosidases. Furthermore, this invention concerns a method for effective control of invasive plant species, in particular by using the herbicidal composition according to the invention.

## Description

This invention concerns a herbicide composition. In particular, this invention concerns a herbicidal composition for effective control of invasive plant species, such as the Japanese knotweed. Furthermore, this invention concerns a method for effective control of invasive plant species, in particular by using the herbicidal composition according to the invention.

Invasive plant species such as the Japanese knotweed (*Fallopia japonica* or *Polygonum cuspidatum*) often spread rapidly in otherwise atypical habitats because of a lack of enemies and because of favourable conditions. In many cases controlling such exotic plants in the indigenous biosphere is difficult when using current techniques. Complete suppression or eradication of these invasive species seems hardly possible or only by using biologically highly questionable methods. Invasive species compete with indigenous plants, leading to a permanent change in flora and ultimately also in fauna, with associated economic implications. It is therefore of general interest to provide means and methods to combat invasive species, in particular plants such as the Japanese knotweed, which is biologically harmless and economically viable.

In the prior art, different compositions and methods are described to combat similar invasive plant species.

For example, WO2017/027431 A1 reveals a herbicidal composition comprising (i) one or more soap and/or detergent ingredients and (ii) free fatty acid (n). The composition may also include pesticidal compositions. A herbicidal arrangement may consist of (i) soya methyl ester, (ii) sodium laurel sulphate and (iii) C6-C12 fatty acid (n) and optionally (iv) diluting agent. In addition, it may also contain enzymes, including pectinase. The disclosed compositions may be in the form of a concentrate applied directly to a site, or may be further diluted for application on site.

DE 10 2007 013363 A1 reveals the use of special detergents as penetration promoters for fungicidal active substances and fungicidal compositions comprising these detergents. In particular, this document concerns polyalkylene oxide derivatives and the use of corresponding compounds.

DE 69633926 T2 reveals a method for influencing the action of plant growth regulators. This document also reveals the use of nonanoic acid (pelargonic acid) in combination with pectinase to regulate plant growth.

US 10182572 B2 reveals herbicidal compositions and methods for inducing phyotoxicity in a plant by applying an aqueous composition to leaf parts of the plant. The aqueous composition comprises at least one nutrient and at least one adjuvant, and has a pH of about 4 to about 7. In some embodiments, the aqueous composition comprises an organic or mineral acid. In some embodiments, phytotoxicity is topical. In some embodiments phytotoxicity is systemic.

Document EP 0272002 B1 reveals a method for enhancing the activity of agrochemicals, comprised of treating a plant with a plant depolymerase enzyme, which degrades plant surface polymers either before or simultaneously when applying the agrochemical.

Against this background the object of this invention is to provide an improved herbicidal composition for ecologically harmless control of invasive plant species. Furthermore, the object of the invention is to provide an improved method for ecologically harmless control of invasive plant species.

This object is achieved in terms of the composition by a composition according to claim 1. In terms of the method, the object is achieved using a method in accordance with Claim 13. Further details of the composition and the method can be found in the respective dependent claims and the following description.

Surprisingly, a herbicidal composition comprising at least one free saturated fatty acid and at least one active enzyme, in which at least one saturated fatty acid comprising ≥6 and ≤10 carbon atoms and at least one active enzyme selected from the group of glycosidases, has been shown to exhibit excellent properties in sustained control of invasive plant species such as Japanese knotweed. For control of this plant species in particular it often shows resistance to ecologically harmless herbicides. In contrast, treating the corresponding invasive plant species with the invented herbicidal composition surprisingly shows a clear effect on the treated plant within a few hours after the first application.

The fact that the saturated fatty acid is present in the composition in free form, i.e. protonated, contributes significantly to the effectiveness of the invented herbicidal composition. Accordingly, in terms of a preferred composition of the invention, it is intended that the herbicidal composition has a pH in a range between ≥pH 3 and ≤pH 7. Preferably, the pH-value of the composition is in a range between ≥pH 3 and ≤pH 5. Without being bound to this theory, it is assumed that the protonated form of saturated fatty acids has a significantly higher membrane permeability than the esters and salts currently in use.

According to a further embodiment of the invention, the saturated fatty acid is selected from the group consisting of caproic acid, oleic acid, caprylic acid, pelargonic acid and capric acid. Surprisingly, saturated fatty acids from this group have been shown to have a high efficacy on plant growth and can lead to the death of undesirable invasive species even in small amounts.

According to a preferred composition according to the invention, at least one saturated fatty acid has ≥6 and ≤10 carbon atoms and comes from the group consisting of caprylic acid, pelargonic acid and capric acid.

Generally, the free saturated fatty acids mentioned are poorly soluble or even completely insoluble in water. This fact has so far been considered disadvantageous in the state of the art, so that esters or salt are commonly used to make the herbicide water soluble or dilutable in water. Surprisingly, however, the applicant found that the poor water solubility had the advantage that the herbicidal composition was not washed away by rain or irrigation after application, which results in the composition having an extended effect on the plant. Furthermore, free saturated fatty acids are completely degradable in soil and can also serve as a nutrient in the fertilization of the soil.

As an additional benefit, the above saturated fatty acids can be obtained from biologically acceptable sources such as coconut oil, calamus oil or black tea. In particular, the coconut extract seems beneficial, since for example caprylic acid is contained in coconut oil in a concentration of up to 9% by weight.

In a further embodiment of the invention, it is intended that the composition comprises the saturated fatty acid in a concentration between ≥ 20 wt.% and ≤ 99 wt.%, preferably ≥ 50 wt.% and ≤ 97 wt.%, even more preferably ≥ 80 wt.% and ≤ 95 wt.%.

According to the invention, in a preferred embodiment it may be provided that the enzyme is at least one glycosidase from the group consisting of α-amylase, β-amylase, cellulase, licheninase, dextranase, polygalacturonase (pectinase), alginase, amylopectin-6-glucanohydrolase, quercitrinase, α-galactosidase, β- galactosidase, galacturan-1.4-alpha-galacturonidase, exo-poly-alpha-galacturonosidase, rhamnogalacturonan hydrolase and rhamnogalacturonan galacturonohydrolase. Surprisingly, the use of a glucosidase from the aforementioned group has been shown to significantly increase the effect of the herbicide. Without being bound to this theory, it is assumed that the named glucosidases lead to a degeneration of the cell membranes, which makes it easier for saturated fatty acids to penetrate the cells and develop their phytotoxic effect.

Polygalacturonases (pectinases) have proven to be particularly effective within this group. Polygalacturonases are enzymes that break down pectic acid and other galacturonans. In doing so, they effectively break down the pectin-emitting lamellae of the plant cell wall.

According to the invention, the composition may comprise the active enzyme in a concentration between ≥ 0.3 wt.% and ≤ 5 wt.%, preferably ≥ 0.5 wt.% and ≤ 3 wt.%, more preferably ≥ 0.5 wt.% and ≤ 2.5 wt.%.

A particular advantage of the herbicide composition according to the invention is that on the one hand it is completely biodegradable, on the other hand it acts quickly, which prevents the good biodegradability from counteracting its effectiveness.

According to a further embodiment of the invention, the composition may comprise at least organic acid and/or a mineral acid in addition to the saturated fatty acid. The addition of a corresponding organic and/or mineral acid can also serve to adjust the pH value of the formula to the preferred range in accordance with the invention.

The organic acid may preferably be selected from the group consisting of formic acid, acetic acid, butyric acid, oxalic acid, succinic acid, citric acid, maleic acid, benzoic acid, salicylic acid and nicotinic acid is preferred.

According to a further preferred embodiment of the invention the herbicidal composition comprises an unsaturated fatty acid having ≥16 and ≤22 carbon atoms, preferably ≥18 and ≤20 carbon atoms. Surprisingly, it was found that the addition of an unsaturated fatty acid having ≥16 and ≤22 carbon atoms can act as a solvent to the free saturated fatty acid. Furthermore, the addition of the unsaturated fatty acid exhibits an addition sticky effect of the composition when being applied, so that the compositions remains on the invasive plant to be defeated which enables an extended impact time of the free saturated fatty acids.

Preferably, the unsaturated fatty acid is selected from the group consisting of palmitoleic acid, sapienic acid, oleic acid, gadoleic acid, gondonic acid, and cetoleic acid. In a very preferred embodiment, the unsaturated fatty acid is oleic acid.

Preferably, the unsaturated fatty acid is comprised in the herbicidal composition in a concentration between ≥ 30 % by weight and ≤ 85% by weight, preferably between ≥ 35 % by weight and ≤ 80%, like between ≥ 40 % by weight and ≤ 75%.

According to another embodiment of the invention the herbicidal composition may comprises an emulsifier to assist the solubilization of the free saturated fatty acid and the active enzyme. Said emulsifier may preferably be at least one emulsifier of the group consisting of lecithin, polyglycerol polyricinoleate, sodium stearoyl lactylate, calcium stearoyl-2-lactylate, stearyl palmityl tartrate, sorbitan monostearate, sorbitan tristearate, sorbitan monolaurate, sorbitan monooleate, sorbitan monopalmitate, propylene glycol alginate, soybean hemicellulose, polysorbate 80, ascorbyl palmitate, tartaric acid esters of mono- and diglycides, acetic acid esters of mono- and diglycides, lactic acid esters of mono- and diglycides, citric acid esters of mono- and diglycides, diacetyltartaric acid esters of mono- and diglycides, sugar glycerides, polyglycerol esters of fatty acids, and phosphoric acid.

Said emulsifier may be comprised in the composition on a concentration of between ≥ 0.3 % by weight and ≤ 10% by weight, preferably between ≥ 0.3 % by weight and ≤ 1% by weight.

According to a particularly preferred formula of the invention, the composition as a free saturated fatty acid comprises at least caprylic acid and as an active enzyme at least a polygalacturonase as well as a pH value in a range of ≥pH 4 and ≤pH 7.

With respect to the method, the object of the invention is achieved by an ecologically acceptable control method of invasive plant species. The method comprises applying a herbicide composition comprising at least one free saturated fatty acid and at least one active enzyme, of which the at least one saturated fatty acid has ≥8 and ≤10 carbon atoms and at least one active enzyme is selected from the group of glycosidases.

Surprisingly, the application of a free saturated fatty acid in combination with an active enzyme from the glycosidase group has been shown to lead to rapid and sustained control of invasive plant species such as Japanese knotweed. Already after a first application clear damage of the invasive plant species can be observed.

According to a preferred embodiment of the method according to the invention, the herbicidal composition may be applied in close proximity to the root, rhizome or tuber. In particular, the herbicidal composition according to the invention may be injected into the soil. Alternatively, the herbicidal composition may be sprayed or potted near the ground.

In principle, within the scope of the method according to the invention, it is also possible to apply the herbicidal composition to the leaves and/or flowers of the invasive species to be controlled, but it has been shown that application to the immediate vicinity of the root, rhizome or tuber has more sustainable effectiveness. Furthermore, the application to the immediate vicinity of the root, rhizome or tuber does ensure that flying insects will come into less contact with the herbicidal composition.

Preferably, the herbicidal composition is applied at least twice with an interval of at least 7 days in accordance with a further arrangement of the invention procedure. This delayed application shows a significant, lasting effect on the invasive species.

In a further embodiment of the invention, the inventive composition is applied directly onto the stem of the invasive plant species. This can be done, for example, by first cutting off the plants to a few centimetres above the soil layer before initial application and then applying the herbicide into the then open stalk or stump. One or more channels running inside the stump are often apparent. Application of the inventive composition usually leads to sustainable control of the species.

The invention will be explained in more detail by the examples below.

### Example 1:

Herbicide composition
99% by weight caprylic acid
1% by weight pectinase (polygalacturonase)

### Application

2,5 ml/m² of the herbicide composition mentioned above was applied to the residual stump of a Japanese knotweed Fallopia Japonica var. Japonica). A clear decomposition of the rhizome was observed within 24 hours. The plant did not sprout again, even for several weeks.

### Example 2

Herbicide composition
97% by weight caproic acid
2.7% by weight palmitoleic acid
0.3% by weight polygalacturonase

### Application:

25 ml/m² of the aforementioned herbicidal composition was applied to the soil in the root area of a Japanese knotweed (Fallopia Japonica var. Japonica). A clear decomposition of the rhizome was observed within 24 hours. The plant did not sprout again, even after several weeks.

### Example 3

Herbicide composition
60% by weight caprylic acid
39% by weight oleic acid
1.0 wt.% polygalacturonase

### Application:

The herbicidal composition is applied to the groove between basalt boulders. Due to the lack of washout of the groove by rain, the composition can concentrate on the rhizome and is not washed out into the surface water. Conventional combating of the invasive species with steam has insufficient effect due to the heat absorption of the basalt blocks and removing the blocks is very expensive and sometimes impossible. A clear decomposition of the rhizome was observed within 2 weeks. The plant did not sprout again, even after several weeks.

### Example 4

Herbicide composition
80% by weight caprylic acid
19% by weight oleic acid
1.0 wt.% polygalacturonase

### Application:

Adding the herbicidal composition at resistant multiannual Japanese knotweed spots it may be necessary to apply the herbicidal composition not only once. When rhizomes are mature, it may be necessary to add the herbicidal composition a few times in succession. If the knotweed is attacked the first time, parts in rest can start to grow. To locate and destroy this spot, a second or a third injection may be necessary. The number of repetitions depends on the size of the rhizome system. In the actual embodiment the herbicide composition was applied three times after growth of new sprouts. A clear decomposition of the rhizome was observed after the third application. The plant did not sprout again, even after several month.

## Claims

1. A herbicidal composition comprising at least one free saturated fatty acid and at least one active enzyme, in which the at least one saturated fatty acid comprising ≥6 and ≤10 carbon atoms and the at least one active enzyme is selected from the group of glycosidases.

2. The herbicidal composition according to claim 1, wherein the composition has a pH in the range between ≥pH 4 and ≤pH 7.

3. The herbicidal composition according to any of the preceding claims, wherein the saturated fatty acid is selected from the group consisting of caproic acid, oleic acid, caprylic acid, pelargonic acid and capric acid.

4. The herbicidal composition according to claim 3, wherein the composition comprises the saturated fatty acid in a concentration between ≥ 75% by weight and ≤ 99% by weight.

5. The herbicidal composition according to the preceding claims, wherein the enzyme is at least one glycosidase from the group consisting of α-amylase, β-amylase, cellulase, licheninase, dextranase, polygalacturonase (pectinase), alginase, amylopectin-6-glucanohydrolase, quercitrinase, α-galactosidase, β- galactosidase, galacturan-1,4-alpha-galacturonidase, exo-poly-alpha-galacturonosidase, rhamnogalacturonan hydrolase and rhamnogalacturonan galacturonohydrolase.

6. The herbicidal composition according to claim 5, wherein the composition comprises the enzyme in a concentration between ≥ 0.3 % by weight and ≤ 1% by weight.

7. The herbicidal composition according to one of the preceding claims, wherein the composition comprises, in addition to the saturated fatty acid, at least one organic acid and/or mineral acid.

8. The herbicidal composition according to claim 7, wherein the organic acid is selected from the group consists of formic acid, acetic acid, butyric acid, oxalic acid, succinic acid, citric acid, maleic acid, benzoic acid, salicylic acid and nicotinic acid.

9. The herbicidal composition according to one of the preceding claims, wherein the composition comprises an unsaturated fatty acid comprising ≥16 and ≤22 carbon atoms, preferably ≥18 and ≤20 carbon atoms.

10. The herbicidal composition according to claim 9, wherein the unsaturated fatty acid is comprised in the composition in a concentration between ≥ 30 % by weight and ≤ 85% by weight, preferably between ≥ 35 % by weight and ≤ 80%, like between ≥ 40 % by weight and ≤ 75%by weight.

11. The herbicidal composition according to one of the preceding claims, wherein the composition comprises an emulsifier of the group consisting of lecithin, polyglycerol polyricinoleate, sodium stearoyl lactylate, calcium stearoyl-2-lactylate, stearyl palmityl tartrate, sorbitan monostearate, sorbitan tristearate, sorbitan monolaurate, sorbitan monooleate, sorbitan monopalmitate, propylene glycol alginate, soybean hemicellulose, polysorbate 80, ascorbyl palmitate, tartaric acid esters of mono- and diglycides, acetic acid esters of mono- and diglycides, lactic acid esters of mono- and diglycides, citric acid esters of mono- and diglycides, diacetyltartaric acid esters of mono- and diglycides, sugar glycerides, polyglycerol esters of fatty acids, and phosphoric acid.

12. The herbicidal composition according to one of the preceding claims, wherein the composition comprises as free saturated fatty acid at least caprylic acid and as an active enzyme at least one polygalacturonase, and wherein the composition has a pH in the range of ≥pH 4 and ≤pH 7.

13. A method for ecologically acceptable control of invasive plant species, including applying a herbicide composition comprising of at least one free saturated fatty acid and at least one active enzyme, wherein the at least one saturated fatty acid comprises ≥8 and ≤ 10 carbon atoms and wherein the at least one active enzyme is selected from the group of glycosidases.

14. The method according to claim 13, wherein the herbicide composition is applied in close proximity to the root, rhizome or tuber.

15. The method according to either claim 13 or 14, in which the herbicidal composition is applied at least twice with an interval of at least 7 days.
